(19) Europäisches Patentamt
European Patent Office
Office européen des brevets

(11) EP 4 491 574 A1

(12) # EUROPEAN PATENT APPLICATION
published in accordance with Art. 153(4) EPC

(43) Date of publication:
**15.01.2025 Bulletin 2025/03**

(21) Application number: **23766862.9**

(22) Date of filing: **07.03.2023**

(51) International Patent Classification (IPC):
***C01B 33/18*** *(2006.01)*

(52) Cooperative Patent Classification (CPC):
**C01B 33/18**

(86) International application number:
**PCT/JP2023/008670**

(87) International publication number:
**WO 2023/171686 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.03.2022 JP 2022035579**

(71) Applicant: **National Institute of Advanced Industrial Science and Technology**
**Chiyoda-ku**
**Tokyo 100-8921 (JP)**

(72) Inventors:
- **IGARASHI, Masayasu**
  **Tsukuba-shi, Ibaraki 305-8560 (JP)**
- **YAGIHASHI, Fujio**
  **Tsukuba-shi, Ibaraki 305-8560 (JP)**
- **MATSUMOTO, Tomohiro**
  **Tsukuba-shi, Ibaraki 305-8560 (JP)**
- **NOZAWA, Takeshi**
  **Tsukuba-shi, Ibaraki 305-8560 (JP)**
- **SATO, Kazuhiko**
  **Tsukuba-shi, Ibaraki 305-8560 (JP)**

(74) Representative: **V.O.**
**P.O. Box 87930**
**2508 DH Den Haag (NL)**

(54) **SILANOL COMPOUND, PRODUCTION METHOD FOR SILANOL COMPOUND, AND COMPOSITION INCLUDING SILANOL COMPOUND**

(57) A silanol compound represented by the following formula (1):

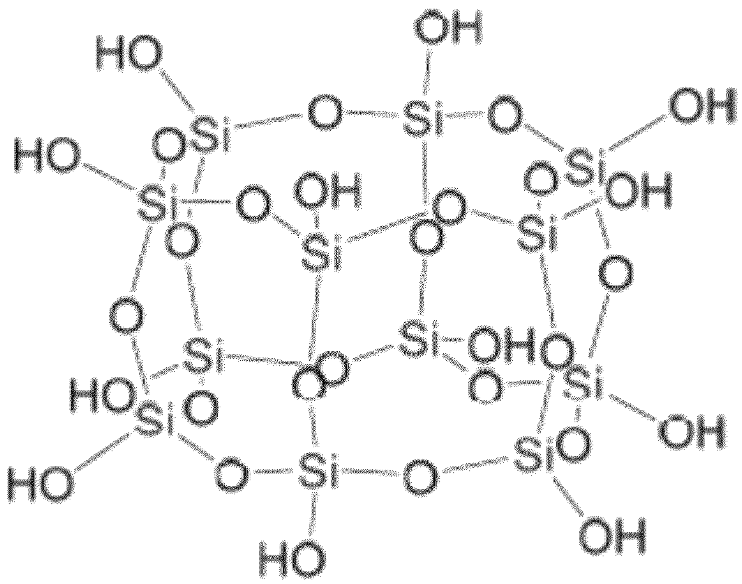

(1)



Processed by Luminess, 75001 PARIS (FR)

(Cont. next page)

[Figure 3]

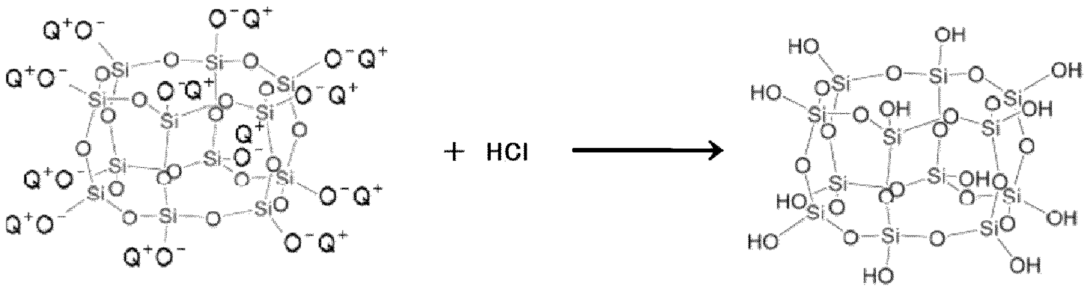


(1)'

(1)

## Description

Technical Field

The present invention relates to a silanol compound, a method for producing the silanol compound, and a composition containing the silanol compound.

Background Art

If substances are controlled at the atomic level to construct structures, the structures can exhibit new physical properties to be formed into useful materials. For example, fullerene, carbon nanotubes, and graphene are nano-carbon materials into which carbon atoms are assembled zero-dimensionally, one-dimensionally, and two-dimensionally, respectively, and have unique physical properties.

$SiO_2$ is a material that is inexhaustibly present on the earth in the same way as carbon, and has been used in various fields until now. It is conceivable that, as methods for obtaining $SiO_2$ materials constructed by controlling $SiO_2$ at the atomic level like nano-carbon materials, for example, a method involving assembling orthosilicic acid ($Si(OH)_4$) as the basic unit of $SiO_2$ represented by the following formula is efficient.

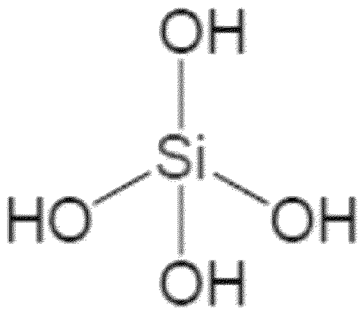

Orthosilicic acid

It is known that, for example, orthosilicic acid can be synthesized and isolated by a method involving reacting a silicon compound having a benzyl protecting group, which is removable by hydrogenolysis in the presence of a Pd or Pt/C catalyst (for example, refer to Non Patent Literature 1). A dimer, a cyclic trimer, and a cyclic tetramer of orthosilicic acid as represented by the following formulae have been successfully synthesized and isolated by the above-mentioned method. Oligomers such as these dimer, cyclic trimer, and cyclic tetramer of orthosilicic acid are also useful as raw materials for obtaining $SiO_2$ materials.

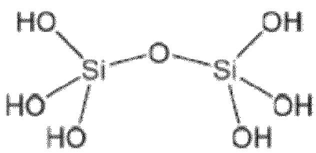

Dimer

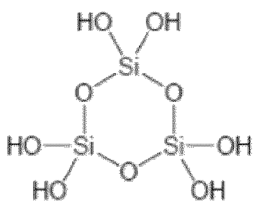

Cyclic trimer

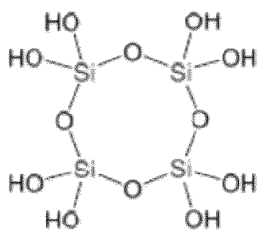

Cyclic tetramer

Citation List

Non Patent Literature

Non Patent Literature 1: Nature Communications, 2017, 8, 140.

Summary of Invention

Technical Problem

Orthosilicic acid ($Si(OH)_4$), and a dimer, a cyclic trimer, and a cyclic tetramer thereof have been successfully synthesized and isolated, but are unstable and immediately dehydration-condensed in the presence of water, and have room for improvement in handleability. Since the dehydration condensation of a cubic octamer ($Q_8H_8$) of orthosilicic acid ($Si(OH)_4$) represented by the following formula proceeds in the absence of a crystallization solvent for coordination and stabilization (for example, amide solvent), the cubic octamer cannot be isolated as pure powder.

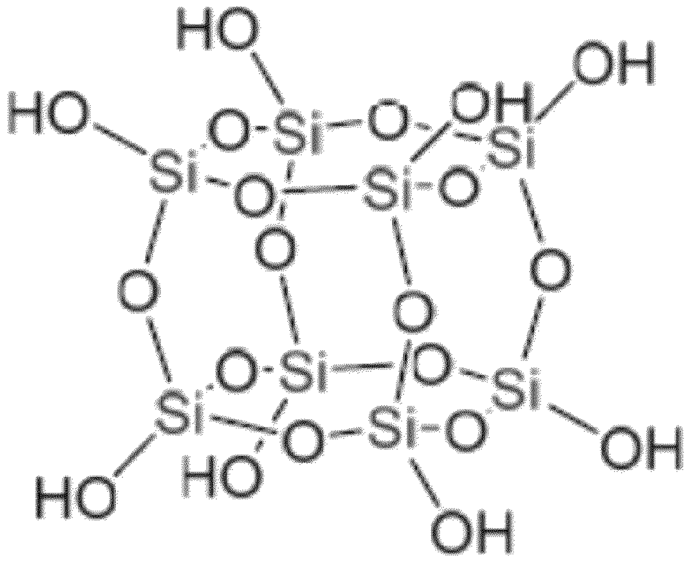

Cubic octamer ($Q_8H_8$)

In general, a pure powder of a silanol compound not solvated with a crystallization solvent is much more advantageous than a solvated silanol powder in material development.

Accordingly, an object of the present invention is to provide a novel oligomeric silanol compound of orthosilicic acid that can be isolated as pure powder since it is not dehydration-condensed, even in the absence of a crystallization solvent.

Solution to Problem

The present inventors have found, as a result of earnest examination, that a hexagonal prismatic dodecamer of orthosilicic acid ($Q_{12}H_{12}$) can be isolated as pure powder since it is not dehydration-condensed, even in the absence of a crystallization solvent, and completed the present invention.

That is, the present invention includes the following aspects.

[1] A silanol compound represented by the following formula (1):

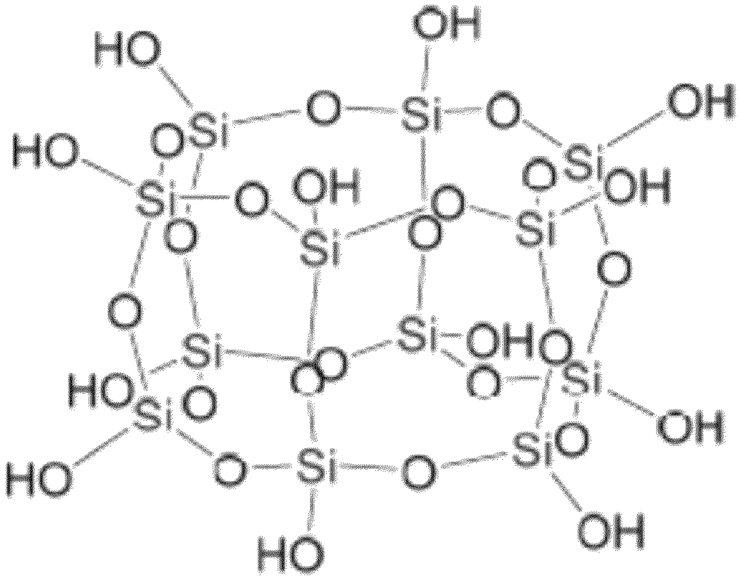

(1)

[2] A composition, comprising the silanol compound according to [1].
[3] The composition according to [2], wherein the content of the silanol compound is 0.1 to 99.9% by mass.
[4] The composition according to [2] or [3], further comprising at least one selected from the group consisting of water, an ether compound, an ester compound, an amine compound, an amide compound, an ammonium salt, and a metallic complex.
[5] A method for producing a silanol compound, comprising:

a proton exchange step of reacting a silicate having the structure represented by the following formula (1)':

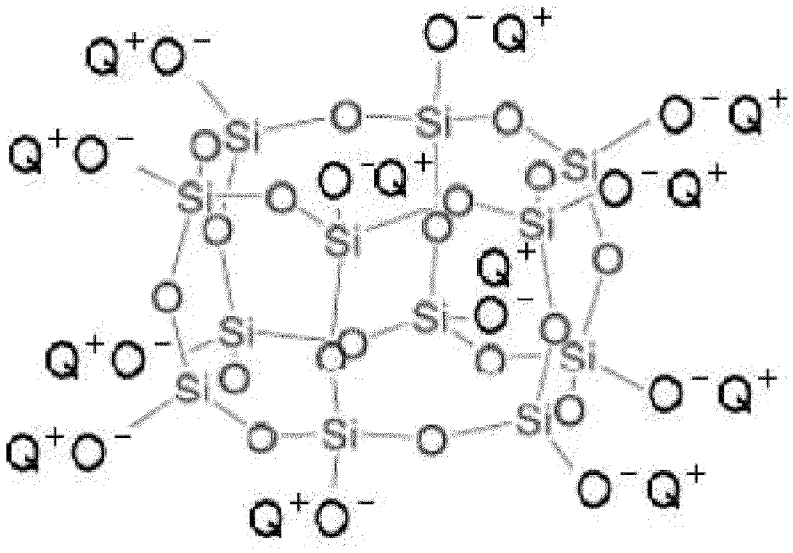

(1)'

wherein $Q^+$ represents a cation,

with an acidic compound to obtain a solution comprising a silanol compound represented by the following formula (1) :

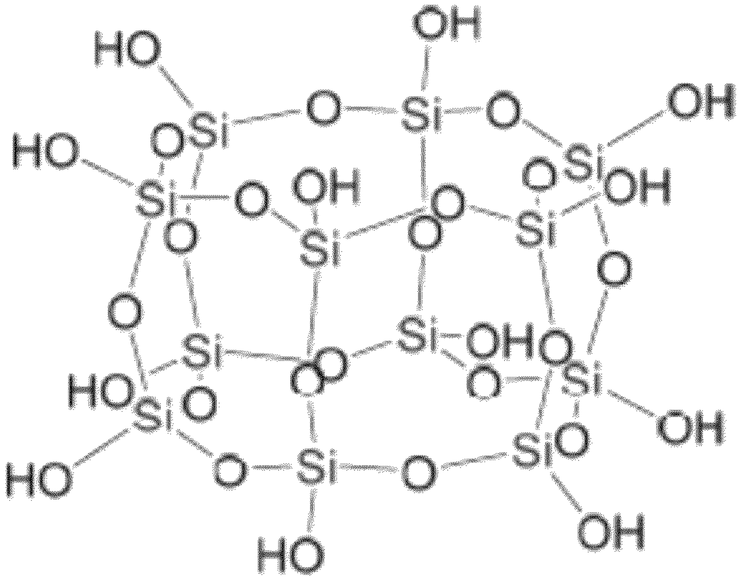

(1)

[6] The method for producing a silanol compound according to [5], further comprising:
a step of adding a poor solvent for depositing the silanol compound represented by the formula (1) to the solution obtained in the proton exchange step to deposit the silanol compound represented by the formula (1), and isolating the silanol compound represented by the formula (1) as powder.
[7] The method for producing a silanol compound according to [5] or [6], wherein the acid dissociation constant, pKa, of the acidic compound in dimethyl sulfoxide (DMSO) is -1 to 20.
[8] The method for producing a silanol compound according to any of [5] to [7], wherein the acid dissociation constant, pKa, of the acidic compound in dimethyl sulfoxide (DMSO) is 12.6 or less.
[9] The method for producing a silanol compound according to any of [5] to [8], wherein the acidic compound is an inorganic acid.
[10] The method for producing a silanol compound according to [9], wherein the inorganic acid is hydrochloric acid or nitric acid.
[11] The method for producing a silanol compound according to [9], wherein the inorganic acid is hydrochloric acid.
[12] The method for producing a silanol compound according to any of [5] to [8], wherein the acidic compound is at least one selected from the group consisting of acetic acid and compounds having structures represented by the following formulae (b-1) to (b-5):

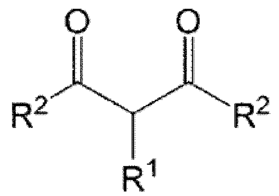

(b-1)

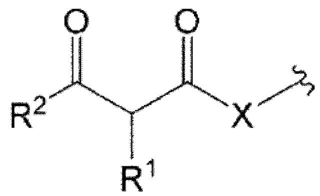

(b-2)

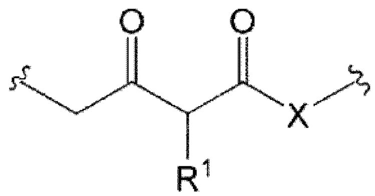

(b-3)

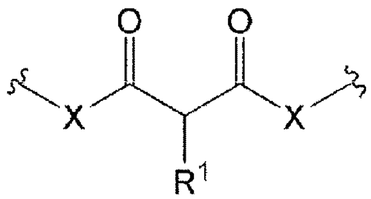

(b-4)

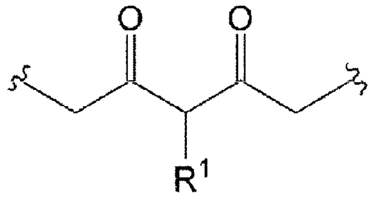

(b-5)

wherein, in formulae (b-1) to (b-5), X each independently represent an oxygen atom, a sulfur atom, or an amino group ($-NR^3-$), $R^1$ represents a hydrogen atom or a hydrocarbon group having 1 to 14 carbon atoms, and $R^2$ each

independently represent a hydrogen atom or a hydrocarbon group having 1 to 14 carbon atoms.
[13] The method for producing a silanol compound according to [12], wherein the acidic compound is a resin having at least one structure selected from the group consisting of structures represented by the formulae (b-2) to (b-5).
[14] The method for producing a silanol compound according to any of [5] to [13], wherein the proton exchange step is performed in at least one liquid selected from the group consisting of water, an ether liquid, an alcohol liquid, an amide liquid, an ester liquid, a halogen-containing liquid, and a polar aprotic liquid.

Advantageous Effect of Invention

The present invention may provide a novel silanol compound that can be isolated as pure powder since it is not dehydration-condensed, even in the absence of a crystallization solvent.

Brief Description of Drawings

[Figure 1] Figure 1 is the result of measuring a product obtained in Example 1 by $^{29}Si$-NMR.
[Figure 2] Figure 2 is the result of measuring the product obtained in Example 1 by high-resolution mass spectrometry (TOF-MS).
[Figure 3] Figure 3 is an example of a proton exchange reaction formula in which an inorganic acid (for example, hydrochloric acid) is made to act on a silicate having the structure represented by the formula (1)' to generate a silanol compound.

Description of Embodiments

Hereinafter, aspects for implementing the present invention (hereinafter abbreviated as "the present embodiments") will be described in detail. The present invention is not limited to the following embodiments, the present invention can be variously modified within the scope of its gist to be implemented.

<Silanol compound>

A silanol compound of the present embodiment is represented by the following formula (1):

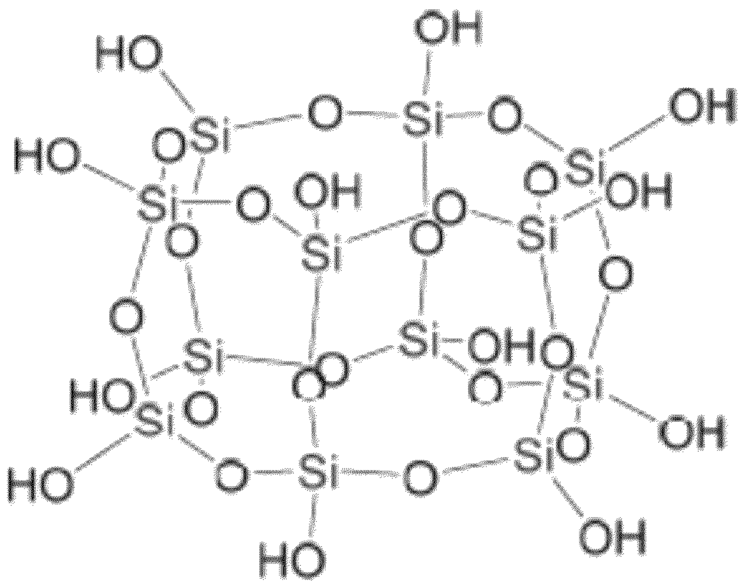

(1)

If the silanol compound of the present embodiment has the above-mentioned structure, the silanol compound can be isolated as pure powder since it is not dehydration-condensed, even in the absence of a crystallization solvent.
Since the dehydration condensation of a conventional silanol compound (for example, cubic octamer of orthosilicic acid ($Si(OH)_4$) ($Q_8H_8$)) proceeds in the absence of a crystallization solvent for coordination and stabilization

(for example, amide solvent), the conventional silanol compound cannot be isolated as pure powder.

In contrast, since the silanol compound of the present embodiment can remain stable as pure powder (for example, purity: 100%), the silanol compound of the present invention is easily handled, and is very advantageous in material development.

In the present embodiment, the silanol compound represented by the above-mentioned formula (1) can be confirmed by various types of NMR, high-resolution mass spectrometry, and X-ray crystal structure analysis.

<Method for producing silanol compound>

A method for producing the silanol compound of the present embodiment comprises a proton exchange step of reacting a silicate having the structure represented by the following formula (1)':

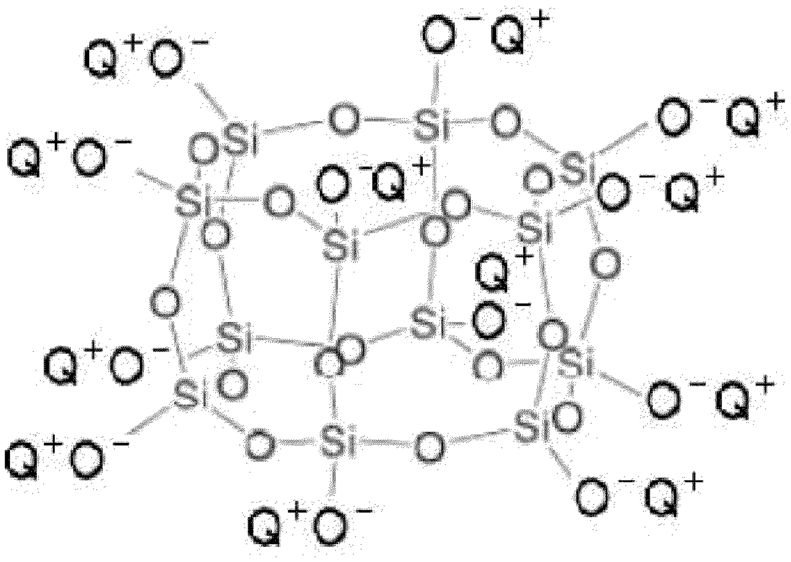

(1)'

wherein, in formula (1)', $Q^+$ represents a cation (hereinafter occasionally abbreviated as a "silicate") with an acidic compound to obtain a solution containing a silanol compound represented by the following formula (1) :

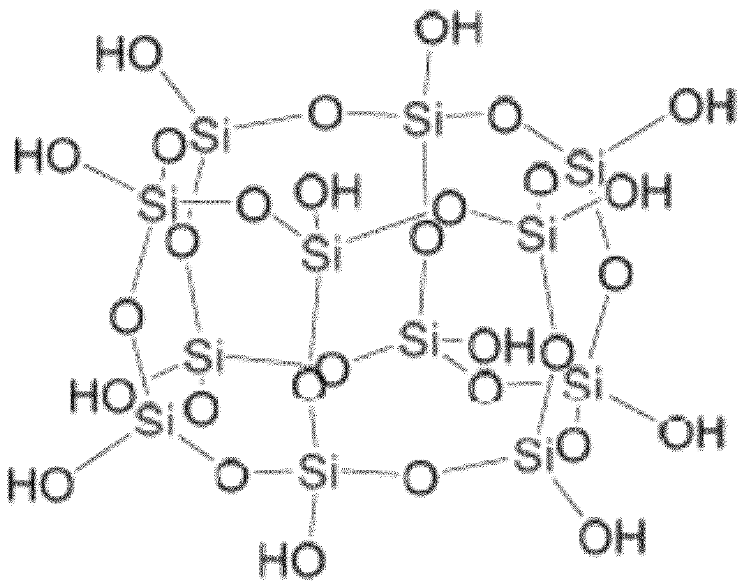

(1)

(hereinafter occasionally abbreviated as a "proton exchange step").

It is preferable that the method for producing the silanol compound of the present embodiment further comprises a step of adding a poor solvent to the solution obtained in the proton exchange step to deposit the silanol compound

represented by the formula (1), and isolating the silanol compound represented by the formula (1) as powder (hereinafter occasionally abbreviated as an "isolation step").

Hereinafter, the silicate, the acidic compound, other reaction conditions and the like, in the proton exchange step will be described in detail.

(Proton exchange step)

The specific type of the silicate used, the specific type of the acidic compound used, the amount of the acidic compound used, the type of a reaction medium used as a solvent or a dispersion medium, the reaction conditions and the like, in the proton exchange step are not particularly limited, and can be suitably selected depending on the purpose.

The acidic compound for the proton exchange step preferably has an acid dissociation constant, pKa, of -1 to 20 in dimethyl sulfoxide (DMSO) (hereinafter occasionally abbreviated as a "pKa (DMSO)").

The acidic compound having a pKa (DMSO) of -1 to 20 tends to exchange protons to enable producing the silanol compound efficiently. If the pKa (DMSO) is -1 to 20, the exchange of the cations ($Q^+$) of the silicate for the protons ($H^+$) of the acidic compound proceeds efficiently, and side reaction is suppressed. The silanol compound itself can therefore be synthesized at a high yield. Since the reaction proceeds under mild conditions immediately, the method for producing the silanol compound of the present embodiment is very suitable industrially. As the pKa (DMSO) decreases, the proton exchange step tends to proceed more rapidly.

The pKa (DMSO) means a well-known numerical value calculated from the concentrations of the components in the acid dissociation equilibrium of the acidic compound at 25°C. Specifically, the pKa (DMSO) is a numerical value that is the common logarithm of Ka calculated in accordance with the following expression.

$$HA \rightleftarrows H^+ + A^-$$

$$K_a = \frac{[H^+][A^-]}{[HA]}$$

In the proton exchange step, the silicate having a structure represented by the following formula (1)':

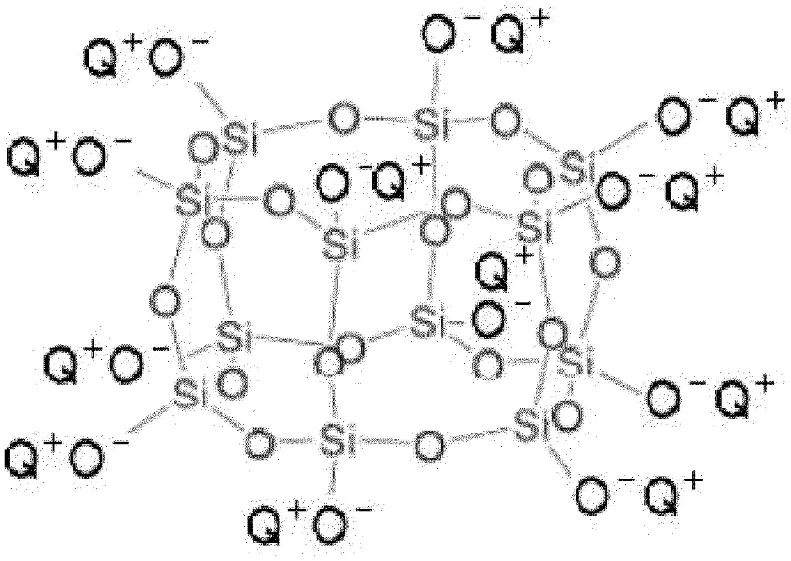

(1)'

wherein Q+ represents a cation, is reacted with the acidic compound.

Examples of the cation $Q^+$ in the formula (1)' include, but not particularly limited to, alkali metal ions such as lithium ions ($Li^+$), sodium ions ($Na^+$), and potassium ions ($K^+$); alkaline-earth metals such as magnesium ions ($Mg^{2+}$) and calcium ions ($Ca^{2+}$); transition metal ions such as iron (III) ions ($Fe^{3+}$), copper (II) ions ($Cu^{2+}$), and zinc ions ($Zn^{2+}$); and ammonium ions such as ammonium ions ($NH_4^+$), tetramethylammonium ions ($NMe_4^+$), ethyltrimethylammonium ions ($NEtMe_3^+$), diethyldimethylammonium ions ($NEt_2Me_2^+$), triethylmethylammonium ions ($NEt_3Me^+$), tetraethylammonium ions ($NEt_4^+$), tetrapropylammonium ions ($NPr_4^+$), and tetrabutylammonium ions ($NBu_4^+$). Among these, sodium ions ($Na^+$), potassium ions ($K^+$), tetramethylammonium ions ($NMe_4^+$), tetraethylammonium ions ($NEt_4^+$), and ethyltrimethylammonium ions ($NEtMe_3^+$) are particularly preferable.

In the proton exchange step, the silicate to be reacted with the acidic compound may be any silicate, for example, a silicate in which two α-cyclodextrin (αCD) molecules are coordinated over and under a hydrate of a hexagonal prismatic dodecamer of potassium silicate ($Q_{12}K_{12}$) (dodecapotassium-2,4,6,8,10,12,14,16,18,20,22,24,25,26,27,28,29,30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triacontan-1,3,5,7,9,11,13,15,17,19,21,23-dodecakis(olate) bis(α-cyclodextrin) hydrate (hereinafter occasionally abbreviated as "$Q_{12}K_{12}$•2αCD•$nH_2O$")), represented by the following formula:

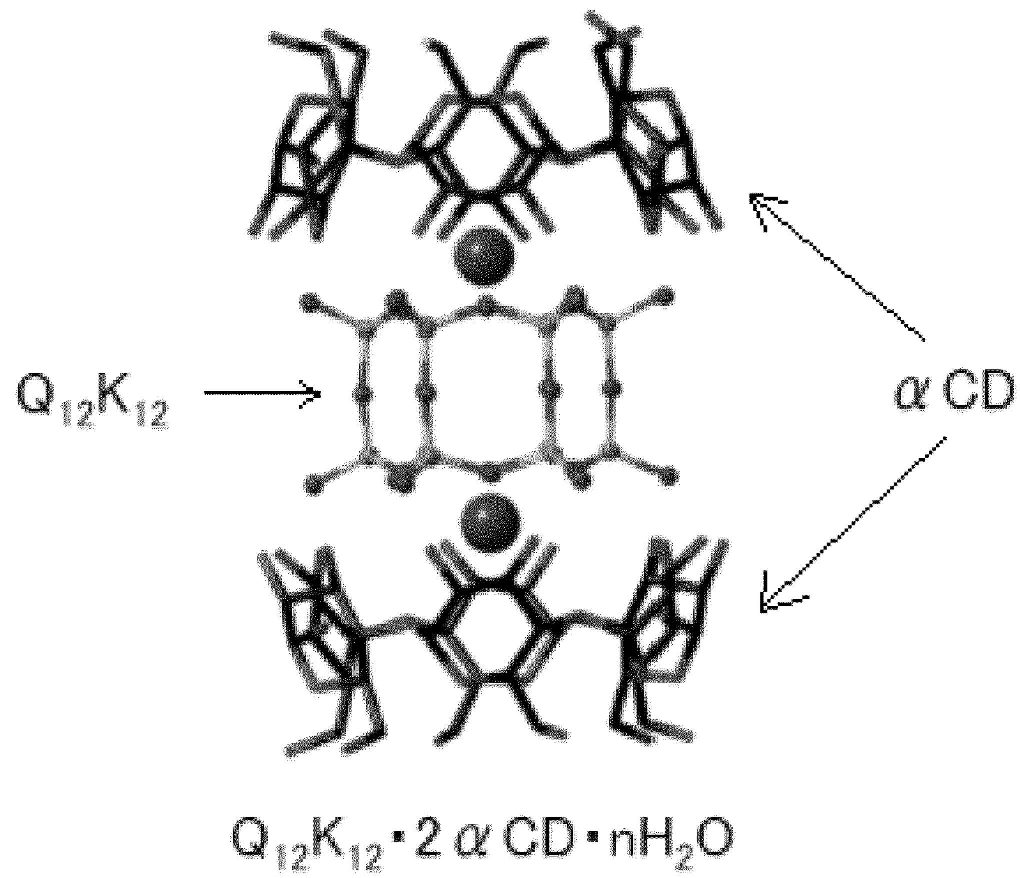


$Q_{12}K_{12}$•2αCD•$nH_2O$

described in Angew. Chem. Int. Ed. Engl. 1997, 36, 743.

Such $Q_{12}K_{12}$•2αCD•$nH_2O$ may be any type of $Q_{12}K_{12}$•2αCD•$nH_2O$. For example, $Q_{12}K_{12}$•2αCD•$nH_2O$ can be prepared with reference to the description in Angew. Chem. Int. Ed. Engl. 1997, 36, 743. and Crystals 2018, 8, 457.

The acidic compound preferably has a pKa (DMSO) of -1 to 20. The pKa (DMSO) is preferably 0 or more, more preferably 1 or more, and further preferably 2 or more. The pKa (DMSO) is preferably 16 or less, more preferably 14 or less, and further preferably 8 or less. If the pKa (DMSO) is in the above-mentioned range, the silanol compound can be efficiently produced.

Specific examples of the acidic compound include, but not particularly limited to, inorganic acids such as nitric acid (having a pKa (DMSO) of 1.4), sulfuric acid (having a pKa1 (DMSO) of 1.4 and a pKa2 (DMSO) of 14.7)), hydrochloric acid (having a pKa (DMSO) of 2.1), phosphoric acid (having a pKa1 (DMSO) of 1.83, a pKa2 (DMSO) of 6.43, and a pKa3 (DMSO) of 11.46); acetic acid; or an organic acid that is at least one selected from the group consisting of compounds having structures represented by the following formulae (b-1) to (b-5):

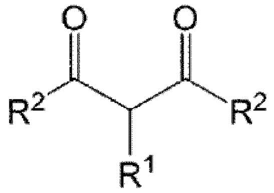
(b−1)

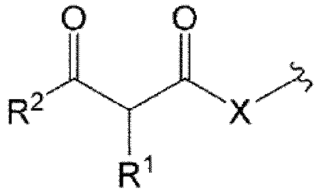
(b−2)

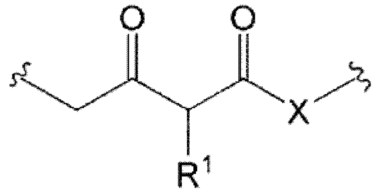
(b−3)

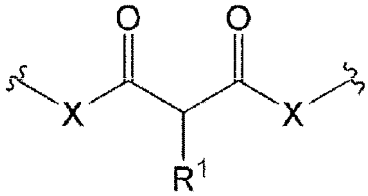
(b−4)

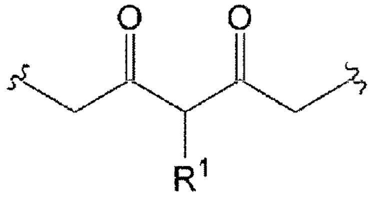
(b−5)

wherein, in formulae (b-1) to (b-5), X each independently represent an oxygen atom, a sulfur atom, or an amino group ($-NR^3-$), $R^1$ represents a hydrogen atom or a hydrocarbon group having 1 to 14 carbon atoms, and $R^2$ each independently represent a hydrogen atom or a hydrocarbon group having 1 to 14 carbon atoms.

If the proton exchange reaction using organic acid is performed, for example, in N,N-dimethylacetamide (hereinafter also described as "DMAc") or methanol (hereinafter also described as "MeOH"), which is the reaction medium described below, the generated ammonium salt or alkali metal salt is dissolved in the reaction medium. It is therefore preferable that the ammonium salt or the alkali metal salt as a byproduct be separated, for example, by column purification. If the proton exchange reaction using inorganic acid is performed, for example, in tetrahydrofuran (hereinafter also described as "THF"), which is a reaction medium described below, the generated ammonium salt or alkali metal salt, α-dextrin, and chemical species derived from α-dextrin are scarcely dissolved in the reaction medium. The ammonium salt or the alkali metal salt can therefore be separated by easy means such as filter filtration to obtain the silanol compound as the filtrate. Accordingly, the acidic compound is preferably an inorganic acid.

Among inorganic acids, nitric acid, sulfuric acid, hydrochloric acid, and phosphoric acid are preferable. Nitric acid or hydrochloric acid is more preferable. Hydrochloric acid is particularly preferable. Hydrochloric acid is inexpensive, and the use of hydrochloric acid tends to increase the yield.

The wavy lines in the above-mentioned formulae (b-2) to (b-5) mean that structures beyond the wavy lines are any structures. For example, the acidic compound may contain a functional group and the like that does not participate in the reaction. Accordingly, for example, the acidic compound having a structure represented by the above-mentioned formula (b-4) may be a compound containing hydrocarbon groups such as methyl groups beyond oxygen atoms corresponding to X like dimethyl malonate, represented by the following formula. For example, the acidic compound having a structure represented by the above-mentioned formula (b-4) may be a compound in which hydrocarbon groups beyond oxygen atoms corresponding to X are bound to form a cyclic structure like Meldrum's acid, represented by the following formula.

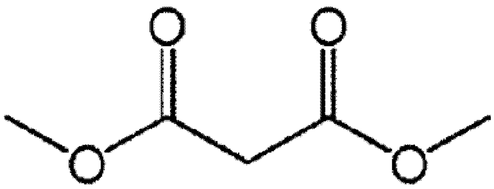
Dimethyl malonate

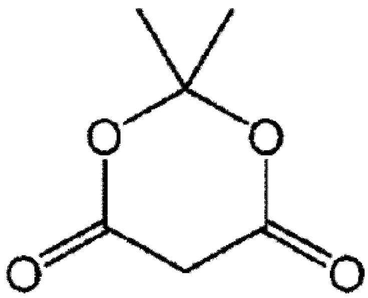
Meldrum's acid

The structures represented by the above-mentioned formulae (b-1) to (b-5) are so-called β-dicarbonyl structures, and it is known that the hydrogen atom of the methylene group between the two carbonyl groups, namely the α-hydrogen,

functions as an acid site. If the acidic compound has any of the structures represented by the above-mentioned formulae (b-1) to (b-5), the acidic compound has a moderate acid dissociation constant, and the electron of the anion generated by the dissociation of the proton is delocalized in the structure. For example, the proton dissociates from the acidic compound having the structure represented by the above-mentioned formula (b-2) as shown in the following formula. It is conceivable that this suppresses the basicity or the nucleophilicity of the anions of the acidic compounds having the structures represented by the above-mentioned formulae (b-1) to (b-5) to enable repressing side reaction effectively.

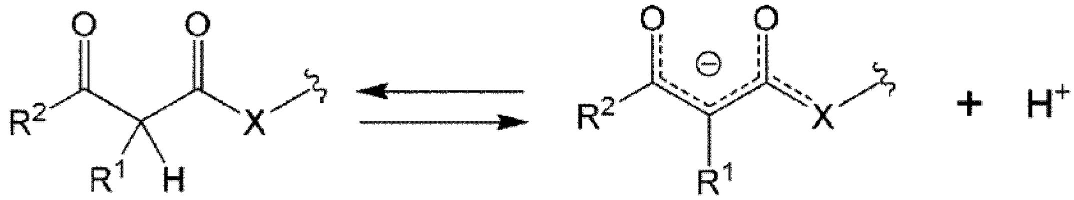

Examples of the amino group (-$NR^3$-) that is X include a secondary amino group (-NH-). X is particularly preferably an oxygen atom. If $R^1$ is a hydrocarbon, $R^1$ has preferably 6 or less carbon atoms, more preferably 5 or less carbon atoms, and further preferably 4 or less carbon atoms. Examples of $R^1$ include, but not particularly limited to, a hydrogen atom, a methyl group (-Me), an ethyl group (-Et), an n-propyl group (-nPr), an i-propyl group (-iPr), an n-butyl group (-nBu), and a phenyl group (-Ph). $R^1$ is preferably a hydrogen atom.

If $R^2$ is a hydrocarbon, $R^2$ has preferably 5 or less carbon atoms, more preferably 4 or less carbon atoms, and further preferably 3 or less carbon atoms. Examples of $R^2$ include a hydrogen atom, a methyl group (-Me), an ethyl group (-Et), an n-propyl group (-nPr), an i-propyl group (-iPr), and an n-butyl group (-nBu). $R^2$ is preferably a hydrogen atom.

Examples of the acidic compound represented by the above-mentioned formula (b-4) include, but not particularly limited to, an acidic compound represented by the following formula (b-4-1). Examples of the acidic compound represented by the above-mentioned formula (b-5) include an acidic compound represented by the following formula (b-5-1):

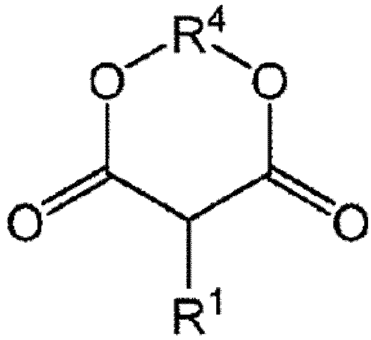

(b−4−1)

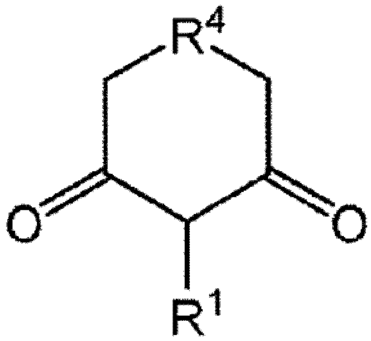

(b−5−1)

wherein, in formulae (b-4-1) and (b-5-1), $R^1$ and $R^4$ represent a hydrogen atom or a hydrocarbon having 1 to 14 carbon atoms, and a divalent hydrocarbon having 1 to 14 carbon atoms, respectively.

Examples of $R^4$ include, but not particularly limited to, a methylene group (-$CH_2$-), an ethylene group (-$CH_2CH_2$-), an n-propylene group (-$CH_2CH_2CH_2$-), a dimethylmethylene group (-$C(CH_3)_2$-), and an i-propylene group (-$C(CH_3)CH_2$-).

Specific examples of the acidic compound include, but not particularly limited to, acetic acid (having a pKa (DMSO) of 12.6), benzoic acid (having a pKa (DMSO) of 11.1), Meldrum's acid (having a pKa (DMSO) of 7.3), Meldrum's acid derivatives, dimedone (having a pKa (DMSO) of 11.2), dimedone derivatives, acetylacetone (having a pKa (DMSO) of 13.3), and acetylacetone derivatives (refer to the following formulae).

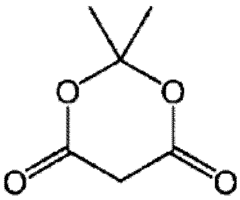

Meldrum's acid

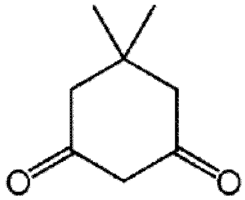

Dimedone

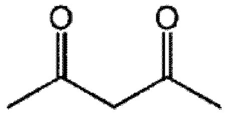

Acetylacetone

A low molecular compound such as Meldrum's acid; an organic solid material such as a resin; or an inorganic solid material such as silica or carbon into which the compounds represented by the above-mentioned formulae (b-2) to (b-5) are introduced is available as the acidic compound. If the acidic compound is such a solid, the acidic compound can be filled into a column and used like an ion exchange resin. The silanol compound can therefore be produced very efficiently. As the acidic compound, a common solid acid (for example, Amberlyst or Amberlite) may be used.

The acidic compound is particularly preferably a resin having at least one structure selected from the group consisting of the above-mentioned formulae (b-2) to (b-5). The acidic compound is preferably recyclable as an acidic compound by exposure to an acidic aqueous solution such as hydrochloric acid after the proton exchange step.

The amount of the acidic compound used in the proton exchange step is usually 1 time or more, preferably 1.5 times or more, and more preferably 2.0 times or more based on the amount of the silicate in terms of the amount of substance. The amount of the acidic compound used is usually 50 times or less, preferably 20 times or less, and more preferably 5 times or less based on the amount of the silicate in terms of the amount of substance. If the amount of the acidic compound used is in the above-mentioned range, the silanol compound can be efficiently produced.

The reaction in the proton exchange step is preferably performed in liquid (reaction medium). Examples of such a reaction medium include, but not particularly limited to, ether liquids such as tetrahydrofuran (THF), tetrahydropyran, dioxane, diethyl ether ($Et_2O$), dimethyl ether, diisopropyl ether, diphenyl ether, methyl ethyl ether, diethylene glycol dimethyl ether, and triethylene glycol dimethyl ether; alcohol liquids such as methanol, ethanol, n-propanol, and i-propanol; amide liquids such as formamide, N,N-dimethylformamide (DMF), acetamide, N-methylacetamide, N,N-dimethylacetamide (DMAc), urea, and tetramethylurea; ester liquids such as ethyl acetate, n-amyl acetate, and ethyl lactate; halogen-containing liquids such as methylene chloride, chloroform, carbon tetrachloride, tetrachloroethane, and hexachloroethane; acetonitrile; acetone; methyl ethyl ketone; phenyl methyl ketone; dimethyl sulfoxide (DMSO); and water.

The reaction medium may be used as a single type but in combination of two or more types.

The amount of the reaction medium used in the proton exchange step is preferably an amount such that the content of the silicate is 0.005 to 0.04 mol/L. This is because, if the content of the silicate is like this, the silanol compound can be efficiently produced. The reaction temperature in the proton exchange step is usually -80°C or more, preferably 0°C or more, and more preferably 20°C or more. The reaction temperature is usually 200°C or less, preferably 70°C or less, and more preferably 40°C or less. The reaction time in the proton exchange step is usually 48 hours or less, preferably 24 hour or less, more preferably 8 hours or less, and particularly preferably 1 hour or less. If the amount, the reaction temperature, and the reaction time are in the above-mentioned ranges, the silanol compound can be efficiently produced.

(Isolation step)

The method for producing the silanol compound of the present embodiment preferably comprises a step of adding a poor solvent to a solution of the silanol compound represented by the above-mentioned formula (1) and obtained in the proton exchange step to deposit the silanol compound represented by the above-mentioned formula (1), and isolating the silanol compound represented by the above-mentioned formula (1) as powder. If the method for producing the silanol compound of the present invention comprises such a step, the silanol compound represented by the above-mentioned formula (1) can be very easily isolated as pure powder since it is not dehydration-condensed, even in the absence of any crystallization solvent.

Examples of the poor solvent for depositing the silanol compound represented by the above-mentioned formula (1) include, but not particularly limited to, hexane, benzene, toluene, dibutyl ether, diisopropyl ether, diethyl ether, dichloromethane, chloroform, and ethyl acetate. Among others, the poor solvent is preferably hexane, benzene, diisopropyl ether, or ethyl acetate. The poor solvent is particularly preferably diethyl ether or ethyl acetate.

If a precursor coordinated with ligands (for example, $\alpha$CD) (for example, $Q_{12}K_{12}$•2$\alpha$CD•n$H_2O$) is used as the silicate to be reacted with the acidic compound in the isolation step, it is preferable to use a solvent that dissolves the ligands and the decomposition products of the ligands (for example, $\alpha$CD and the decomposition products of $\alpha$CD) as the poor solvent for depositing the silanol compound represented by the above-mentioned formula (1).

The boiling point of the poor solvent for depositing the silanol compound represented by formula (1) is usually 0°C or more, preferably 10°C or more, and more preferably 30°C or more, and usually 300°C or less, preferably 200°C or less, and more preferably 150°C or less.
It is preferable that salts generated in the reaction be filtered out of the solution obtained in the proton exchange step, and the filtrate then be concentrated to obtain a concentrated solution. If the concentrated solution is used, the silanol compound represented by the above-mentioned formula (1) can be still more efficiently deposited.
In the isolation step, the time for depositing the silanol compound represented by the above-mentioned formula (1), and the like, may be any time, and is suitably selected. The time is usually 24 hours or less, preferably 12 hours or less, and more preferably 6 hour or less. The time is usually 0.25 hour or more, preferably 0.5 hours or more, and more preferably 1 hour or more. If the silanol compound is deposited with stirring, the particles are deposited more uniformly, and is more easily powdered in a drying step.
Examples of the method for isolating the silanol compound represented by the above-mentioned formula (1) as powder include, but not particularly limited to, filtration.
Furthermore, it is preferable to dry the powder of the silanol compound represented by the above-mentioned formula (1) and obtained in such an isolation method. The drying temperature, the drying pressure, the drying time and the like may not be limited, and can be suitably selected depending on the purpose.

<Composition>

A composition of the present embodiment contains the silanol compound represented by the above-mentioned formula (1).
The types or the like of compounds contained in the composition of the present embodiment besides the silanol compound represented by the above-mentioned formula (1), may be any types, and can be suitably selected depending on the purpose. As mentioned above, the silanol compound can be isolated as pure powder (purity: 100%), and the content of the silanol compound represented by the above-mentioned formula (1) in the composition of the present embodiment can therefore be suitably adjusted. The content of the silanol compound represented by the above-mentioned formula (1) in the composition of the present embodiment may be any content, and is, for example, preferably 0.1 to 99.9% by mass, more preferably 10 to 99.9% by mass, further preferably 25 to 99.9% by mass, and particularly preferably 50 to 99.9% by mass.
Examples of the compounds contained in the composition of the present embodiment besides the silanol compound represented by the above-mentioned formula (1) include, but not particularly limited to, water, an ether compound, an ester compound, an amine compound, an amide compound, an ammonium salt, and a metallic complex. The composition may contain only one of these compounds, or may contain two or more thereof in combination.
The content of water in the composition of the present embodiment is preferably 0 to 20% by mass, more preferably 0 to 15% by mass, and further preferably 0 to 10% by mass.
So long as the ether compound has an ether bond, the ether compound may not be particularly limited to any specific type. Examples of the ether compound include tetrahydrofuran (THF), tetrahydropyran, dioxane, diethyl ether ($Et_2O$), dimethyl ether, diisopropyl ether, diphenyl ether, methyl ethyl ether, diethylene glycol dimethyl ether, and triethylene glycol dimethyl ether. The composition may contain only one ether compound, or may contain two or more ether compounds.
The content of the ether compound contained in the composition of the present embodiment (the total content of two or more ether compounds if the two or more ether compounds are contained) is preferably 0 to 70% by mass, more preferably 5 to 50% by mass, and further preferably 10 to 40% by mass.
So long the ester compound has an ester bond, the ester compound may not be particularly limited to any specific type. Examples of the ester compound include methyl acetate, ethyl acetate, propyl acetate, butyl acetate, n-amyl acetate, ethyl lactate, ethyl formate, ethyl propionate, and ethyl butyrate. The composition may contain only one ester compound, or may contain two or more ester compounds.
The content of the ester compound contained in the composition of the present embodiment (the total content of two or more ester compounds if the two or more ester compounds are contained) is preferably 0 to 70% by mass, more preferably 2 to 50% by mass, and further preferably 5 to 30% by mass.
So long the amine compound has an amino group (the amine compound may be a primary amine, a secondary amine, or a tertiary amine), the amine compound may not be particularly limited to any specific type. Compounds having both an amino group and an amide group are classified as "amide compounds". Examples of the amine compound include aniline ($NH_2Ph$), diphenylaniline ($NHPh_2$), pyridine, dimethylpyridine ($Me_2Pyr$), di-tert-butylpyridine ($tBu_2Pyr$), pyrazine (Pyraz), pyridazine, pyrimidine, triphenylamine ($NPh_3$), triethylamine ($Et_3N$), and di-isopropylethylamine ($iPr_2EtN$). Among the amine compounds, aniline ($NH_2Ph$) is particularly preferable. The composition may contain only one amine compound, or may contain two or more amine compounds.
The content of the amine compound contained in the composition of the present embodiment (the total content of

two or more amine compounds if the two or more amine compounds are contained) is preferably more than 0.1% by mass, more preferably 1% by mass or more, and further preferably 10% by mass or more. The content is usually less than 95% by mass, preferably 80% by mass or less, more preferably 60% by mass or less, and further preferably 50% by mass or less.

So long as the amide compound has an amide bond, the amide compound may not be particularly limited to any specific type. Examples of the amide compound include a compound represented by the following formula (i) or (ii) :

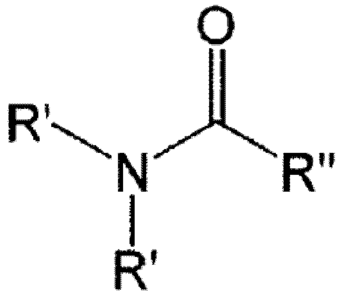

(i)

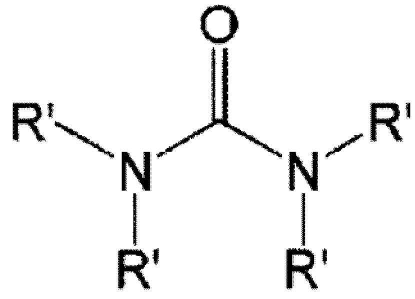

(ii)

wherein, in formulae (i) and (ii), R' and R'' each independently represent a hydrogen atom or a hydrocarbon having 1 to 10 carbon atoms.

Examples of R' and R'' include, but not particularly limited to, a hydrogen atom, a methyl group (-Me), an ethyl group (-Et), an n-propyl group (-nPr), an i-propyl group (-iPr), and a phenyl group (-Ph). Examples of the compound represented by the above-mentioned formula (i) include formamide, DMF, acetamide, N-methylacetamide, and DMAc. Examples of the compound represented by the above-mentioned formula (ii) include, but not particularly limited to, urea, dimethylurea, tetramethylurea ($Me_4Urea$), and diisopropylurea. The composition may contain only one amide compound, or may contain two or more amide compounds. The content of the amide compound contained in the composition of the present embodiment (the total content of two or more amide compounds if the two or more amide compounds are contained) may be 0% by mass (not contained) or more and 90% by mass or less.

So long as the ammonium salt is a compound consisting of an ammonium ion and a counter anion, the ammonium salt may not be particularly limited to any specific type. Examples of the ammonium ion include, but not particularly limited to, a tetrahydroammonium ion ($NH_4^+$), a tetramethylammonium ion ($NMe_4^+$), a tetraethylammonium ion ($NEt_4^+$), a tetrapropylammonium ion ($NPr_4^+$), a tetrabutylammonium ion ($NBu_4^+$), a benzyltributylammonium ion ($NBnBu_3^+$), a tributyl (methyl) ammonium ($NBu_3Me^+$) ion, a tetrapentylammonium ion ($NPen_4^+$), a tetrahexylammonium ion ($NHex_4^+$), a tetraheptylammonium ion ($NHep_4^+$), a 1-butyl-1-methylpyrrolidinium ion ($BuMePyr^+$), a methytrioctylammonium ion ($NMeOct_3^+$), a dimethyloctadecylammonium ion, a hydropyridinium ion ($C_5H_5N^+H$), a hydroanilinium ion ($PhNH_2^+H$), a trimethyladamantylammonium ion, and a Meldrum's acid ion. Examples of the counter anion include a fluoride ion ($F^-$), a chloride ion ($Cl^-$), a bromide ion ($Br^-$), an iodide ion (I-), an acetoxy ion ($AcO^-$), a nitrate ion ($NO_3^-$), an azide ion ($N_3^-$), a tetrafluoroborate ion ($BF_4^-$), a perchlorate ion ($ClO_4^-$), and a sulfate ion ($HSO_4^-$).

As the ammonium salt, tetrabutylammonium chloride ($NBu_4Cl$), tetrabutylammonium bromide ($NBu_4Br$), tetrapentylammonium chloride ($NPen_4Cl$), dimethyldioctadecylammonium chloride, trimethyladamantylammonium hydroxide, and Meldrum's acid-tetramethylammonium salt are particularly preferable. The composition may contain only one ammonium salt, or may contain two or more ammonium salts.

The content of the ammonium salt contained in the composition of the present embodiment (the total content of two or more ammonium salts if the two or more ammonium salts are contained) is preferably more than 0.1% by mass and more preferably 20% by mass or more. The content is usually less than 95% by mass and preferably 80% by mass or less. The ratio of the ammonium salt to the silanol compound (the total amount of substance of the ammonium salt/the total amount of substance of the silanol compound) in the composition of the present embodiment is preferably more than 0 and more preferably 1 or more. The ratio is usually 12 or less, preferably 8 or less, and more preferably 6 or less.

The composition of the present embodiment may contain dimethyl sulfoxide (DMSO) besides the silanol compound represented by the above-mentioned formula (1).

The content of dimethyl sulfoxide in the composition of the present embodiment is preferably 0 to 70% by mass, more preferably 10 to 60% by mass, and further preferably 20 to 55% by mass.

## Examples

Although, hereinafter, the present embodiments will be described in further detail using specific Examples, the present embodiment is not at all limited by the following Examples.

[Example 1] Synthesis of $Q_{12}H_{12}$

As dodecapotassium-2, 4, 6, 8, 10, 12, 14, 16, 18, 20, 22, 24, 25, 26, 27, 28, 29, 30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triac ontan-1,3,5,7,9,11,13,15,17,19,21,23-dodecakis(olate) bis(α-dextrin) hydrate (hereinafter occasionally abbreviated as "$Q_{12}K_{12}$•2αCD•n$H_2O$"), 0.823 g (0.200 mmol) of $Q_{12}K_{12}$•2αCD•49.2$H_2O$ was suspended in 10 mL of THF (reaction medium) to prepare a dispersion. To the dispersion was added 0.501 mL (6.00 mmol) of hydrochloric acid, followed by stirring for 15 minutes to obtain a suspension. This suspension was filtered through a filter to obtain filtrate.

To the obtained filtrate was added 10 mL of ethyl acetate (poor solvent). The mixture was stirred for 10 minutes, resulting in reprecipitation (the deposition of solid matter). This suspended solution was filtered through a filter to separate the solid matter. The solid matter was collected and then dried under reduced pressure to isolate a compound represented by the composition formula $Si_{12}O_{13}H_{12}$ (a compound represented by the following formula (1), namely 2,4,6,8,10,12,14,16,18,20,22,24,25,26,27,28,29,30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triac ontan-1,3,5,7,9,11,13,15,17,19,21,23-dodecanol (CAS No. 126347-25-9 (hereinafter occasionally abbreviated as "$Q_{12}H_{12}$")) as a colorless solid (powder) at a yield of 90% (0.170 g) . The colorless solid (powder) of $Q_{12}H_{12}$ was dissolved in DMSO-$d_6$, which was deuterated DMSO. The solution was measured for NMR, so that a peak was observed at 7.07 ppm by $^1$H-NMR, and a peak was observed at -101.2 ppm by $^{29}$Si-NMR. The colorless solid (powder) of $Q_{12}H_{12}$ was dissolved in a mixed solvent of dimethyl sulfoxide and acetonitrile, and the solution was subjected to high-resolution mass spectrometry (TOF-MS). As a result, while the theoretical value: $H_{12}O_{30}Si_{12}Na$ [M + Na] was 850.6537, the observed value was 850.6538. As mentioned above, various types of NMR and high-resolution mass spectrometry confirmed that the product obtained in Example 1 was $Q_{12}H_{12}$, having a structure represented by the following formula (1). It was found that $Q_{12}H_{12}$ was able to maintain a stable condition as pure powder (purity: 100%).

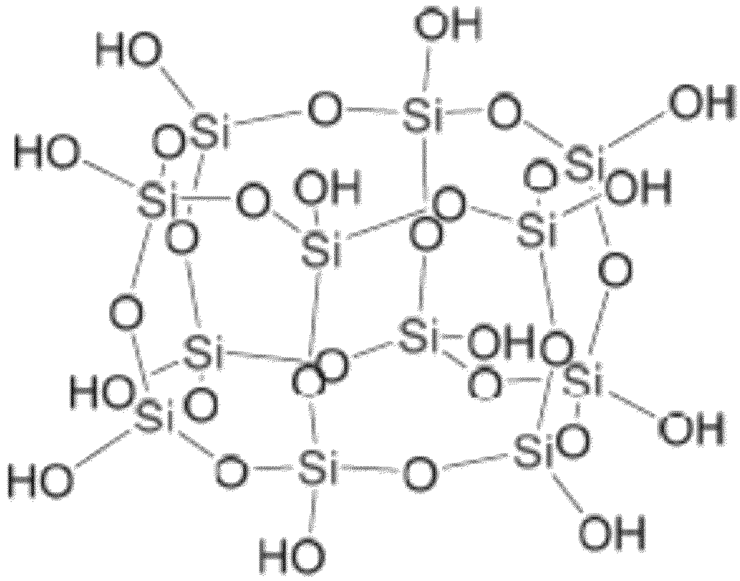

(1)

[Example 2] Synthesis of $Q_{12}H_{12}$

To a dispersion in which 6.845 g (1.602 mmol) of $Q_{12}K_{12}$•2αCD•59.3$H_2O$ was suspended in 80 mL of THF (reaction medium) was added 3.924 mL (46.99 mmol) of hydrochloric acid, followed by stirring for 15 minutes to obtain a suspension. This suspension was filtered through a filter to obtain filtrate.

To the obtained filtrate was added 80 mL of ethyl acetate (poor solvent). The mixture was stirred for 60 minutes, resulting in reprecipitation (the deposition of solid matter). This suspended solution was filtered through a filter to separate the solid matter. The solid matter was collected and then dried under reduced pressure to isolate $Q_{12}H_{12}$ as a colorless solid (powder) at a yield of 74% (1.167 g).

[Example 3] Synthesis of $Q_{12}H_{12}$

To a dispersion in which 6.886 g (1.602 mmol) of $Q_{12}K_{12}$•2αCD•59.3$H_2O$ was suspended in 80 mL of THF (reaction medium) was added 3.007 mL (47.44 mmol) of nitric acid, followed by stirring for 15 minutes to obtain a

suspension. This suspension was filtered through a filter to obtain filtrate.

To the obtained filtrate was added 80 mL of ethyl acetate (poor solvent). The mixture was stirred for 60 minutes, resulting in reprecipitation (the deposition of solid matter). This suspended solution was filtered through a filter to separate the solid matter. The solid matter was collected and then dried under reduced pressure to isolate $Q_{12}H_{12}$ as a colorless solid (powder) at a yield of 14% (0.215 g).

[Example 4] Crystallization of $Q_{12}H_{12}$

To the $Q_{12}H_{12}$ (1.004 g) as the powder obtained in Example 2 was added 100 mL of N,N-dimethylacetamide (hereinafter also described as "DMAc"), and the $Q_{12}H_{12}$ was dissolved therein to obtain a solution. This solution was concentrated under reduced pressure to isolate 1.186 g of a colorless crystal comprising $Q_{12}H_{12}$ and DMAc. The obtained crystal was dissolved in DMSO-$d_6$, which was deuterated DMSO. The solution was measured for NMR, so that a peak was observed at 7.07 ppm by $^1$H-NMR, and a peak was observed at -101.2 ppm by $^{29}$Si-NMR. The content of $Q_{12}H_{12}$ was calculated as 55.2% by mass from the integral value of $^1$H-NMR.

[Example 5] Crystallization of $Q_{12}H_{12}$

To the $Q_{12}H_{12}$ (0.205 g) as the powder obtained in Example 2 was added 2.000 mL of dimethyl sulfoxide (hereinafter also described as "DMSO"), and the $Q_{12}H_{12}$ was dissolved therein to obtain a solution. THF was added to this solution to isolate 0.258 g of a colorless crystal comprising $Q_{12}H_{12}$ and DMSO. The obtained crystal was dissolved in DMF-$d_7$, which was deuterated DMF. The solution was measured for NMR, so that a peak was observed at 7.38 ppm by $^1$H-NMR, and a peak was observed at -100.8 ppm by $^{29}$Si-NMR. The content of $Q_{12}H_{12}$ was calculated as 63.9% by mass from the integral value of $^1$H-NMR.

[Example 6] Crystallization of $Q_{12}H_{12}$

To the $Q_{12}H_{12}$ (0.408 g) as the powder obtained in Example 2 were added 10.000 mL of 1,4-dioxane and 0.400 mL of water, and the $Q_{12}H_{12}$ was dissolved therein to obtain a solution. This solution was heated at 100°C to isolate 0.404 g of a colorless crystal comprising $Q_{12}H_{12}$ and 1,4-dioxane. The obtained crystal was dissolved in DMSO-$d_6$, which was deuterated DMSO. The solution was measured for NMR, so that a peak was observed at 7.07 ppm by $^1$H-NMR, and a peak was observed at -101.2 ppm by $^{29}$Si-NMR. The content of $Q_{12}H_{12}$ was calculated as 81.4% by mass from the integral value of $^1$H-NMR.

[Example 7] Crystallization of $Q_{12}H_{12}$

To the $Q_{12}H_{12}$ (0.100 g) as the powder obtained in Example 2 were added 10.000 mL of THF and 0.105 mL of water ($H_2O$), and the $Q_{12}H_{12}$ was dissolved therein to obtain a solution. This solution was left to stand at room temperature to isolate 0.109 g of a colorless crystal comprising $Q_{12}H_{12}$, THF, and $H_2O$. The obtained crystal was dissolved in DMSO-$d_6$, which was deuterated DMSO. The solution was measured for NMR, so that a peak was observed at 7.07 ppm by $^1$H-NMR, and a peak was observed at -101.2 ppm by $^{29}$Si-NMR. The content of $Q_{12}H_{12}$ was calculated as 76.7% by mass from the integral value of $^1$H-NMR.

[Example 8] Crystallization of $Q_{12}H_{12}$

To the $Q_{12}H_{12}$ (0.202 g) as the powder obtained in Example 2 was added 2.000 mL of dimethyl sulfoxide (hereinafter also described as "DMSO"), and the $Q_{12}H_{12}$ was dissolved therein to obtain a solution. THF was added to this solution to isolate 0.342 g of a colorless crystal comprising $Q_{12}H_{12}$ and DMSO. The obtained crystal was dissolved in DMF-$d_7$, which was deuterated DMF. The solution was measured for NMR, so that a peak was observed at 7.38 ppm by $^1$H-NMR, and a peak was observed at -100.8 ppm by $^{29}$Si-NMR. The content of $Q_{12}H_{12}$ was calculated as 51.5% by mass from the integral value of $^1$H-NMR.

[Example 9] Crystallization of $Q_{12}H_{12}$

To the $Q_{12}H_{12}$ (0.026 g) as the powder obtained in Example 2 was added 20.000 mL of diethylene glycol dimethyl ether, and the $Q_{12}H_{12}$ was dissolved therein to obtain a solution. This solution was concentrated under reduced pressure to isolate 0.015 g of a colorless crystal comprising $Q_{12}H_{12}$ and diethylene glycol dimethyl ether. The obtained crystal was dissolved in DMSO-$d_6$, which was deuterated DMSO. The solution was measured for NMR, so that a peak was observed at 7.07 ppm by $^1$H-NMR, and a peak was observed at -101.2 ppm by $^{29}$Si-NMR. The content of $Q_{12}H_{12}$ was calculated as

75.5% by mass from the integral value of $^1$H-NMR.

The present application is based on Japanese Patent Application, filed on March 8, 2022 (Japanese Patent Application No. 2022-035579). The contents thereof are incorporated herein by reference.

Industrial Applicability

Since a silanol compound of the present embodiment can maintain a stable condition as pure powder (for example, purity: 100%), the silanol compound is easily handled, very advantageous in material development, and industrially utilizable.

## Claims

1. A silanol compound represented by the following formula (1):

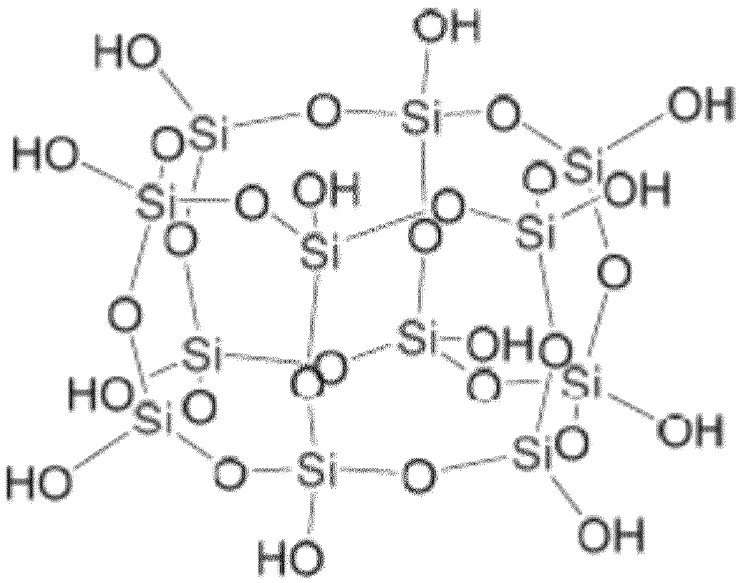

(1)

2. A composition, comprising the silanol compound according to claim 1.

3. The composition according to claim 2, wherein the content of the silanol compound is 0.1 to 99.9% by mass.

4. The composition according to claim 2 or 3, further comprising at least one selected from the group consisting of water, an ether compound, an ester compound, an amine compound, an amide compound, an ammonium salt, and a metallic complex.

5. A method for producing a silanol compound, comprising:

a proton exchange step of reacting a silicate having a structure represented by the following formula (1)':

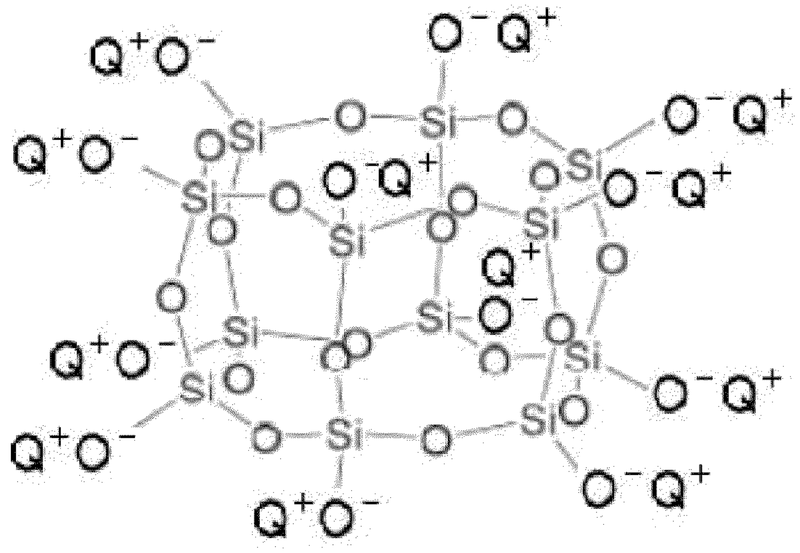

(1)'

wherein $Q^+$ represents a cation,

with an acidic compound to obtain a solution comprising a silanol compound represented by the following formula (1) :

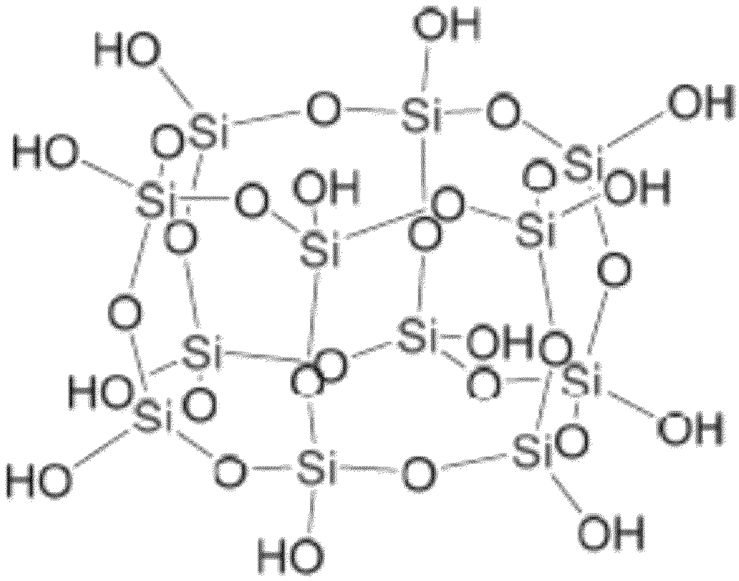

(1)

6. The method for producing a silanol compound according to claim 5, further comprising:
a step of adding a poor solvent for depositing the silanol compound represented by the formula (1) to the solution obtained in the proton exchange step to deposit the silanol compound represented by the formula (1), and isolating the silanol compound represented by the formula (1) as powder.

7. The method for producing a silanol compound according to claim 5, wherein the acid dissociation constant, pKa, of the acidic compound in dimethyl sulfoxide (DMSO) is -1 to 20.

8. The method for producing a silanol compound according to claim 5, wherein the acid dissociation constant, pKa, of the acidic compound in dimethyl sulfoxide (DMSO) is 12.6 or less.

9. The method for producing a silanol compound according to claim 5, wherein the acidic compound is an inorganic acid.

10. The method for producing a silanol compound according to claim 9, wherein the inorganic acid is hydrochloric acid or

nitric acid.

**11.** The method for producing a silanol compound according to claim 9, wherein the inorganic acid is hydrochloric acid.

**12.** The method for producing a silanol compound according to claim 5, wherein the acidic compound is at least one selected from the group consisting of acetic acid and compounds having structures represented by the following formulae (b-1) to (b-5):

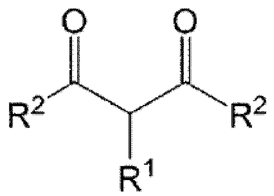

(b-1)

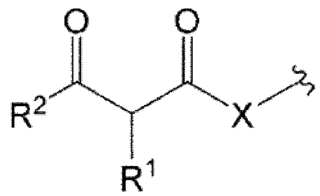

(b-2)

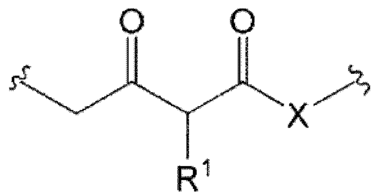

(b-3)

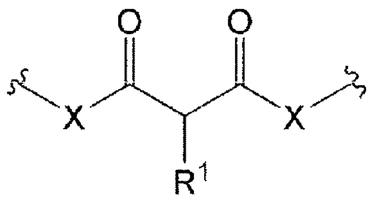

(b-4)

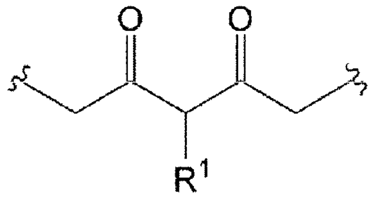

(b-5)

wherein, in the formulae (b-1) to (b-5), X each independently represent an oxygen atom, a sulfur atom, or an amino group ($-NR^3-$), $R^1$ represents a hydrogen atom or a hydrocarbon group having 1 to 14 carbon atoms, and $R^2$ each independently represent a hydrogen atom or a hydrocarbon group having 1 to 14 carbon atoms.

**13.** The method for producing a silanol compound according to claim 12, wherein the acidic compound is a resin having at least one structure selected from the group consisting of structures represented by the formulae (b-2) to (b-5).

**14.** The method for producing a silanol compound according to claim 5, wherein the proton exchange step is performed in at least one liquid selected from the group consisting of water, an ether liquid, an alcohol liquid, an amide liquid, an ester liquid, a halogen-containing liquid, and a polar aprotic liquid.

[Figure 1]

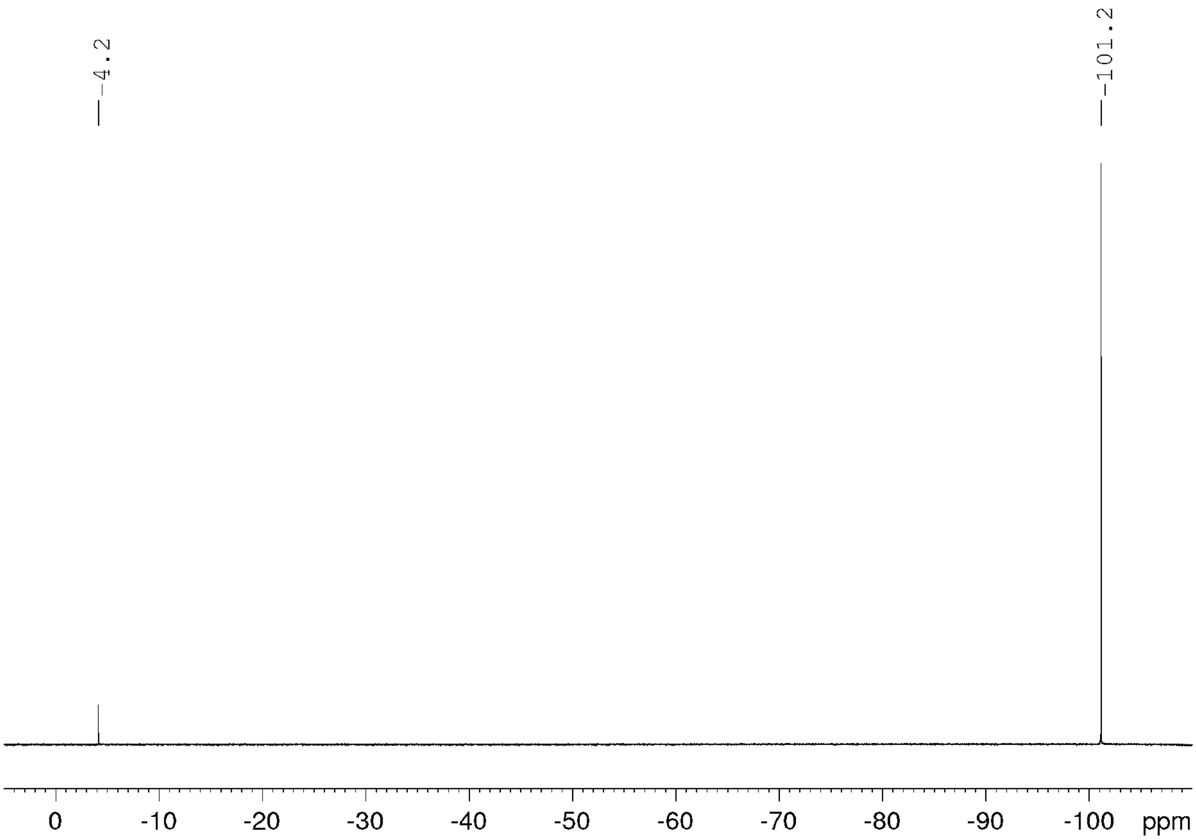

[Figure 2]

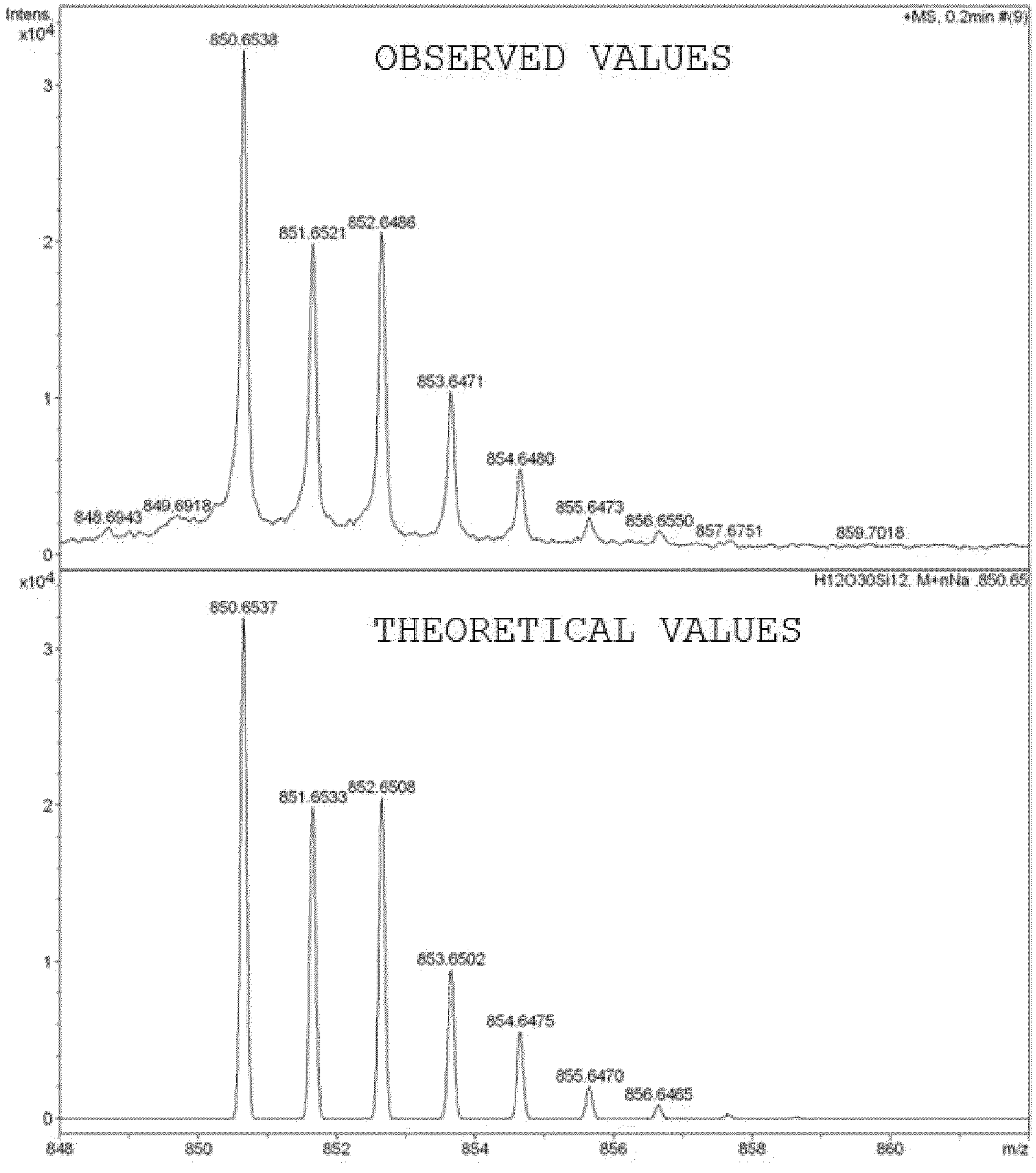
Intens.
x10^4
+MS, 0.2min #(9)
OBSERVED VALUES
850.6538
851.6521
852.6486
853.6471
854.6480
855.6473
856.6550
857.6751
859.7018
848.6943
849.6918
x10^4
H12O30Si12, M+nNa ,850.65
THEORETICAL VALUES
850.6537
851.6533
852.6508
853.6502
854.6475
855.6470
856.6465
848
850
852
854
856
858
860
m/z

[Figure 3]

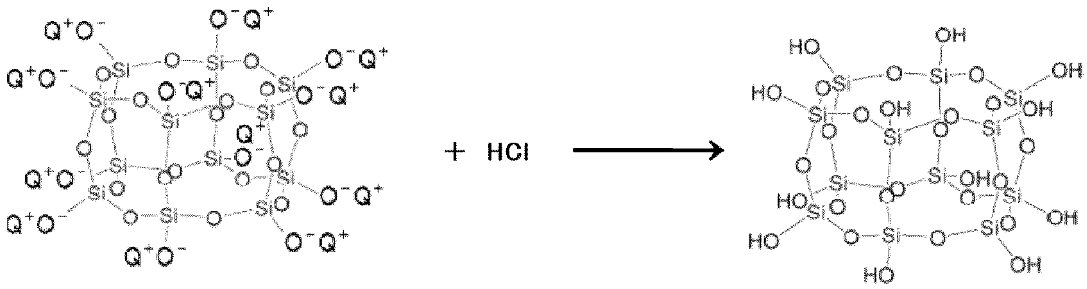


(1)' (1)

**INTERNATIONAL SEARCH REPORT**

International application No. **PCT/JP2023/008670**

**A. CLASSIFICATION OF SUBJECT MATTER**

***C01B 33/18***(2006.01)i
FI: C01B33/18 Z

According to International Patent Classification (IPC) or to both national classification and IPC

**B. FIELDS SEARCHED**

Minimum documentation searched (classification system followed by classification symbols)

C01B33/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2021-127345 A (THE NATIONAL INSTITUTE OF ADVANCED INDUSTRIAL SCIENCE AND TECHNOLOGY) 02 September 2021 (2021-09-02)<br>claims, paragraphs [0012], [0033], [0040], [0065]-[0076] | 1-14<br>2-14 |
| X<br>Y | W. Mozgawa et al., Vibrational spectra of aluminosilicate structural clusters, Journal of Molecular Structure, 2004, 704, 247-257<br>abstract, tables 1, 2, fig. 1., 3., 6. | 1<br>2-14 |
| X<br>Y | MORAVETSKI, Viktor et al., 29Si NMR Chemical Shifts of Silicate Species: Ab Initio Study of Environment and Structure Effects, Journal of the American Chemical Society, 1996, 118, 13015-13020<br>abstract, table 4 | 1<br>2-14 |

☑ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 May 2023** | **23 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/008670

C. DOCUMENTS CONSIDERED TO BE RELEVANT

| Category* | Citation of document, with indication, where appropriate, of the relevant passages | Relevant to claim No. |
|---|---|---|
| X | AHLRICHS, Reinhart et al., Nonempirical direct scf calculations on sodalite and double six-ring models of SiO2 and AlPO4 minerals: H24Si24O60, H12Si12O30, H12Al6P6O30, CHEMICAL PHYSICS LETTERS, 1989, Volume 164, number 2, 3, 199-204 abstract, tables 1, 2, 3, 4, fig. 2. | 1 |
| Y | | 2-14 |
| Y | WO 2020/085403 A1 (THE NATIONAL INSTITUTE OF ADVANCED INDUSTRIAL SCIENCE AND TECHNOLOGY) 30 April 2020 (2020-04-30) paragraphs [0089]-[0115] | 2-14 |
| Y | JP 2007-92019 A (FUJIFILM CORP.) 12 April 2007 (2007-04-12) paragraphs [0044], [0045] | 2-14 |
| A | MIROSLAW, Handke et al., Vibrational spectroscopy of the double 4-, 6-membered rings in silicates and siloxanes, Journal of Molecular Structure, 2005, 744-747, 671-675 entire text | 1-14 |

Form PCT/ISA/210 (second sheet) (January 2015)

**INTERNATIONAL SEARCH REPORT**
**Information on patent family members**

International application No.
**PCT/JP2023/008670**

| Patent document cited in search report | Publication date (day/month/year) | Patent family member(s) | Publication date (day/month/year) |
|---|---|---|---|
| JP 2021-127345 A | 02 September 2021 | US 2021/0061824 A1<br>claims, paragraphs [0012], [0042], [0049], [0074]-[0085]<br>US 2022/0056056 A1<br>WO 2018/193732 A1<br>EP 3613749 A1<br>CN 110520430 A | |
| WO 2020/085403 A1 | 30 April 2020 | US 2022/0081305 A1<br>paragraphs [0136]-[0157]<br>EP 3872240 A1<br>CN 113195801 A | |
| JP 2007-92019 A | 12 April 2007 | US 2007/0054135 A1<br>paragraphs [0217], [0218]<br>KR 10-2007-0026276 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022035579 A


### Non-patent literature cited in the description


- *Nature Communications*, 2017, vol. 8, 140
- *Angew. Chem. Int. Ed. Engl.*, 1997, vol. 36, 743
- *Crystals*, 2018, vol. 8, 457
- *CHEMICAL ABSTRACTS*, 126347-25-9